# EUROPEAN PATENT APPLICATION

(11) **EP 4 456 499 A1**
(43) Date of publication of application: **30.10.2024**
(21) Application number: 22912040.7
(22) Date of filing: 23.12.2022
(51) Int. Cl.: H04L 43/50, H04L 43/065, H04L 69/321

(54) **NETWORK TEST METHOD**

(30) Priority: 23.12.2021 KR 20210186577
(71) Applicant: LG INNOTEK CO., LTD., Seoul 07796 (KR)
(72) Inventor: KIM, Ji Hoon, Seoul 07796 (KR)
(74) Representative: DREISS Patentanwälte PartG mbB
(86) International application number: PCT/KR2022/021234
(87) International publication number: WO 2023/121407

(57) **Abstract**

A test method of a network test device according to an embodiment is a test method of a controller unit implemented including a media access control layer, and the method includes obtaining data through a management data pin of the media access control layer; determining whether a physical layer connected to the media access control layer exists based on the obtained data; performing a test of the controller unit in a first test mode in response to determining that the connected physical layer exists; and performing a test of the controller unit in a second test mode in response to determining that the connected physical layer does not exist.

## Description

### [Technical Field]

An embodiment relates to a network test method, and in particular, to a test method of a network test device for verifying a network line of a MAC layer.

### [Background Art]

Vehicle parts are rapidly becoming electronic, and accordingly, a type and number of electronic devices (e.g., electronic control units (ECUs) mounted on vehicles are increasing significantly. Electronic devices may be mainly used in a power train control system, a body control system, a chassis control system, a vehicle network, a multimedia system, etc. The power train control system can mean an engine control system, an automatic transmission control system, etc. The body control system may mean a body electronics control system, a convenience device control system, a lamp control system, etc. The chassis control system may mean a steering device control system, a brake control system, a suspension control system, etc. The vehicle network may mean a CAN (controller area network), a FlexRay-based network, a MOST (media oriented system transport)-based network, etc.

The multimedia system may refer to a navigation device system, a telematics system, an infotainment system, etc.

The systems and the electronic devices constituting each of the systems are connected through a vehicle network, and a vehicle network is required to support a function of each electronic device. The CAN may support a transmission speed of up to 1 Mbps, and may support automatic retransmission of a collided frame, and error detection based on a cycle redundancy check (CRC). The FlexRay-based network may support a transmission speed of up to 10 Mbps, and may support simultaneous transmission of data through 2 channels, synchronous data transmission, etc. The MOST-based network is a communication network for high-quality multimedia and may support a transmission speed of up to 150 Mbps.

On the other hand, vehicle telematics systems, infotainment systems, and improved safety systems require high transmission speed and system scalability. However, the CAN and the FlexRay-based networks do not sufficiently support the above requirements. The MOST-based networks can support higher transmission speeds than CAN and FlexRay-based networks, but it costs a lot to apply the MOST-based network to all networks of the vehicle.

Due to these problems, an Ethernet-based network may be considered as the vehicle network. The Ethernet-based network may support bidirectional communication through a pair of Ethernet network lines, and may support transmission speeds of up to 10 Gbps.

According to the system configuration of the vehicle's communication system, the expandability in terms of connectivity with the outside is gradually expanding compared to the vehicle's internal network as well as the existing CAN-based communication application network. Ethernet communication is being applied inside the vehicle in consideration of a wider scope of application, such as communication with cloud servers for communication devices and connected cars.

Meanwhile, the Ethernet-based network device as described above includes a media access control (MAC) unit and a physical layer (PHY) unit. In this case, most network devices are produced by separating the media access control unit and the physical layer unit.

In this case, the media access control unit can basically operate while connected to a physical layer unit. In this case, the physical layer unit may convert data provided from the media access control unit into a digital signal in a form that can be transmitted through an Ethernet network line. In addition, if there is no physical layer unit connected to the media access control unit, the media access control unit cannot operate, and accordingly, there is a problem that the operation test of the media access control unit cannot be performed.

Accordingly, there is a need for a new method to efficiently test the media access control unit.

### [Disclosure]

### [Technical Problem]

An embodiment provides a network test device and a test method capable of performing a test of the media access control layer even when the physical layer is not connected to the media access control layer, and a test method thereof.

In addition, an embodiment provides a network test device and a test method capable of supporting various test modes depending on the network environment of the media access control layer.

The technical problems to be achieved in the proposed embodiment are not limited to the technical problems mentioned above, and other technical problems not mentioned in the embodiments will be clearly understood by those of ordinary skill in the art to which the embodiments proposed from the description below

### [Technical Solution]

A test method of a network test device according to an embodiment is a test method of a controller unit implemented including a media access control layer, and the method includes obtaining data through a management data pin of the media access control layer; determining whether a physical layer connected to the media access control layer exists based on the obtained data; performing a test of the controller unit in a first test mode in response to determining that the connected physical layer exists; and performing a test of the controller unit in a second test mode in response to determining that the connected physical layer does not exist.

In addition, the management data pin includes an MDIO (Management Data Input/Output) pin of the media access control layer.

In addition, the obtaining of the data includes obtaining identification information of the connected physical layer, wherein if the identification information of the physical layer is obtained, the physical layer is recognized as connected to the media access control layer, and wherein if the identification information of the physical layer is not obtained, the physical layer is recognized as not connected to the media access control layer.

In addition, the method further comprises receiving a signal input through a specific pin of a GPIO (General-Purpose Input/Output) of the controller unit, wherein the obtaining of the data is performed when a first signal is received through the specific pin, and wherein when a second signal is received through the specific pin, performing a test of the controller unit in a third test mode.

In addition, the method further comprises generating a first test packet; encrypting the generated first test packet; transmitting the encrypted first test packet; receiving a second test packet corresponding to the first test packet; decoding the received second test packet; and comparing the first test packet and the second test packet, and wherein a transmission path of the first test packet and a reception path of the second test packet are different depending on the first to third test modes.

In addition, the transmitting of the first test packet includes transmitting the first test packet to the connected physical layer in the first test mode, and wherein the receiving of the second test packet includes receiving the second test packet transmitted from the connected physical layer in the first test mode.

In addition, a transmission pin and reception pin of the media access control layer are directly connected in the second test mode, and the first test packet in the second test mode is a test packet transmitted from the transmission pin of the media access control layer, and the second test packet in the second test mode is a test packet received through the reception pin of the media access control layer.

In addition, the transmitting of the first test packet includes transmitting the first test packet to a sub or slave media access control layer connected to the media access control layer in the third test mode, and the receiving of the second test packet includes receiving the second test packet corresponding to the first test packet transmitted from the sub or slave media access control layer.

In addition, the method further comprises selecting an encryption algorithm for encrypting the generated first test packet.

In addition, the selecting of the encryption algorithm includes selecting different encryption algorithms according to test modes for testing the controller unit.

Meanwhile, a network test device according to the embodiment comprises a controller unit including a media access control layer, wherein the controller unit includes a packet generation unit adapted to generate a first test packet; a packet encryption unit adapted to encrypt the generated first test packet; a packet decryption unit adapted to decrypt a second test packet received from the media access control layer; a comparison unit adapted to compare the first test packet and the second test packet; and a processor adapted to determine a test mode, control transmission of the first test packet and reception of the second test packet through a test line corresponding to the determined test mode, and output test result information according to a comparison result of the comparison unit, wherein the processor is adapted to acquire data through a management data input/output (MDIO) pin of the media access control layer, determine whether a physical layer connected to the media access control layer exists based on the data obtained through the MDIO pin, transmit the first test packet and receive the second test packet through a first test line corresponding to a first test mode in response to determining that the connected physical layer exists, and transmit the first test packet and receive the second test packet through a second test line corresponding to a second test mode in response to determining that the connected physical layer does not exist, and wherein the first test line and the second test line are different from each other.

In addition, the processor is adapted to determine that the connected physical layer exists if the data obtained through the MDIO pin is identification information of a specific physical layer.

In addition, the processor is adapted to receive a signal input through a specific pin of a general-purpose input/output (GPIO), determine the first test mode or the second test mode based on data obtained through the MDIO pin in response to the signal received through the specific pin being a first signal, and transmit the first test packet and receive the second test packet through a third test line corresponding to a third test mode in response to the signal received through the specific pin being a second signal.

In addition, the first test line connects the media access control layer and the physical layer, the second test line directly connects a transmission pin of the media access control layer and a reception pin of the media access control layer, and the third test line connects the media access control layer and a sub or slave media access control layer.

In addition, the processor is adapted to select an encryption algorithm corresponding to the determined test mode and encrypt the first test packet based on the selected encryption algorithm.

### [Advantageous Effects]

A network unit according to an embodiment may include a controller unit implemented including a media access control layer. In this case, the network unit may operate under different conditions according to an established network environment. Accordingly, the embodiment may configure a test environment corresponding to a network environment in which the network unit operates, and allow the test of the network unit to be performed in the configured test environment. Accordingly, the embodiment may perform a test corresponding to the network environment in which the network unit is actually used, and accordingly, the test accuracy of the network unit may be improved.

In addition, the embodiment recognizes a first state in which the physical layer is connected to the network unit, a second state in which the physical layer is not connected, and a third state in which a sub media access control layer is connected, and determines a test mode of the network unit based on a recognition result. Specifically, the network unit in the embodiment supports first to third test modes. In addition, the network unit may recognize the currently configured test environment and enter a test mode corresponding to the recognized test environment to proceed with the test of the network unit. Accordingly, the embodiment may shorten a test progress time, thereby improving the productivity of the network unit.

Furthermore, an embodiment may perform a test on one network unit in various test environments, thereby improving product reliability and product satisfaction of the network unit.

### [Description of Drawings]

FIG. 1 is a diagram illustrating a network test system according to a comparative example.
FIG. 2 is a schematic diagram of a network test device according to an embodiment.
FIG. 3 is a diagram for describing an interface of a media access control layer included in a network unit of FIG. 2.
FIG. 4 is a diagram specifically illustrating a controller unit of a network unit according to an embodiment.
FIG. 5 is a diagram illustrating a test environment configuration unit of FIG. 2 according to an embodiment.
FIG. 6 is a diagram for describing a first test line according to an embodiment.
FIG. 7 is a diagram illustrating a second test line according to an embodiment.
FIG. 8 is a diagram illustrating a third test line according to an embodiment.
FIG. 9 is a flowchart for step-by-step explaining a method for determining a test mode of a network test device according to an embodiment.
FIG. 10 is a flowchart for step-by-step explaining a first test method according to an embodiment.
FIG. 11 is a flowchart for step-by-step explaining a second test method according to an embodiment.
FIG. 12 is a flowchart for step-by-step explaining an setting operation of FIG. 11.
FIG. 13 is a flowchart for step-by-step explaining a third test method according to an embodiment.

### [Modes of the Invention]

Hereinafter, the embodiment disclosed in the present specification will be described in detail with reference to the accompanying drawings, but the same or similar components are designated by the same reference numerals regardless of drawing numbers, and repeated description thereof will be omitted. The component suffixes "module" and "part" used in the following description are given or mixed together only considering the ease of creating the specification, and have no meanings or roles that are distinguished from each other by themselves. In addition, in describing the embodiments disclosed in the present specification, when it is determined that detailed descriptions of a related well-known art unnecessarily obscure gist of the embodiments disclosed in the present specification, the detailed description thereof will be omitted. Further, the accompanying drawings are merely for facilitating understanding of the embodiments disclosed in the present specification, the technological scope disclosed in the present specification is not limited by the accompanying drawings, and it should be understood as including all modifications, equivalents and alternatives that fall within the spirit and scope of the present invention.

It will be understood that, although the terms "first," "second," etc. may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, it will be understood that there are no intervening elements present.

As used herein, a singular expression includes a plural expression, unless the context clearly indicates otherwise.

It will be understood that the terms "comprise", "include", or "have" specify the presence of stated features, integers, steps, operations, elements, components and/or groups thereof disclosed in the present specification, but do not preclude the possibility of the presence or addition of one or more other features, integers, steps, operations, elements, components, and/or groups thereof.

Hereinafter, embodiments of the present invention will be described in detail with reference to the accompanying drawings.

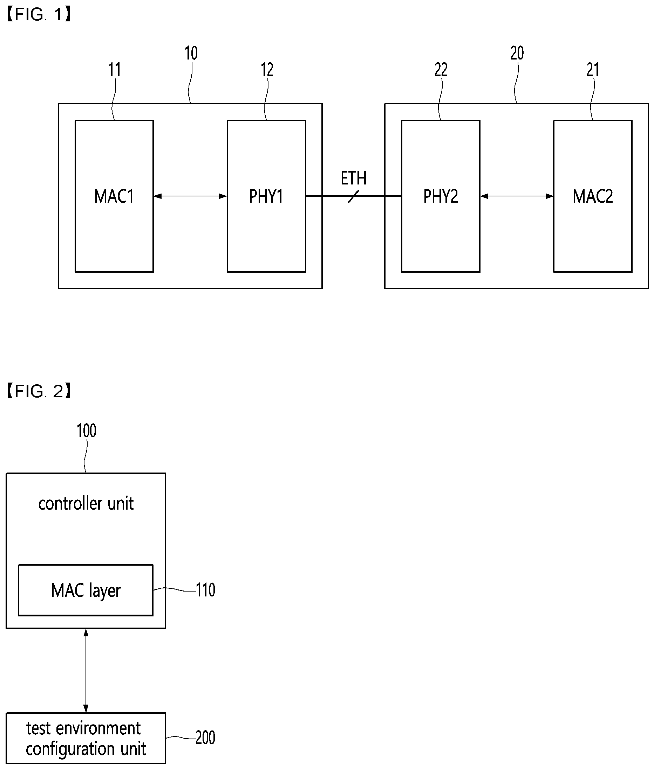

FIG. 1 is a diagram illustrating a network test system according to a comparative example.

Referring to FIG. 1, in a comparative example, in order to test a network unit, another network unit of the same model or different model is required to be a counterpart of the test target. Here, the network unit may refer to a unit including any one of a media access control (MAC) layer and a physical (PHY) layer.

That is, a general network device includes a media access control (MAC) layer and a physical (PHY) layer. In addition, in order to test the network device, a first network device and a second network device each including the media access control (MAC) layer and the physical (PHY) layer must be provided.

Specifically, the network test system of the comparative example includes a first network device 10 and a second network device 20.

In this case, the first network device 10 may mean a master device. For example, the first network device 10 may mean a target to be tested. The second network device 20 may mean a counterpart network device required for the test of the first network device 10. The second network device 20 may be a slave device provided for the test of the first network device 10 set as the master device.

The first network device 10 includes a first media access control layer 11 (MAC1) and a first physical layer 12 (PHY1).

And the second network device 20 includes a second media access control layer 21 (MAC2) and a second physical layer 22 (PHY2), similar to the first network device 10.

A test process of the first network device 10 will be described as follows.

The first media access control layer 11 (MAC1) of the first network device 10 outputs a test packet to the first physical layer 12 (PHY1). The first physical layer 12 (PHY1) receives the test packet and converts the received test packet into a signal that can be transmitted through an Ethernet line ETH. In addition, the first physical layer 12 (PHY1) transmits the converted test packet to the second physical layers 22 (PHY2) through an Ethernet line ETH.

The second physical layers 22 (PHY2) receives a test packet transmitted from the first physical layer 12 (PHY1) and provides the test packet to the second media access control layer 21 (MAC2). The second media access control layer 21 (MAC2) transmits the received test packet to the first physical layer 12 (PHY1) again through the second physical layers 22 (PHY2).

Thereafter, the first media access control layer 11 (MAC1) receives a test packet retransmitted from the second network device 20 through the first physical layer 12 (PHY1). Thereafter, the first media access control layer 11 (MAC1) compares the transmitted test packet with the received test packet. In addition, the first media access control layer 11 (MAC1) verifies a network operation state according to a comparison result of the two test packets.

However, the network test system of the comparative example takes a lot of time to verify the Ethernet line (ETH) and verify the network operation status when producing a network device including a media access control layer, and accordingly, there is a problem of low mass production.

For example, if a network unit including a media access control layer is produces, the network test system in the comparative example has the problem of requiring an additional product of the same model or counterpart for testing. In addition, the network test system of the comparative example requires a distinction between a master and a slave model in order to proceed with the test. In addition, the network test system of the comparative example uses ping to transmit and receive signals for testing between the master and the slave. Accordingly, the network test device of the comparative example must wait until receiving a response signal corresponding to the ping, and there is a problem of increasing the test time accordingly.

In addition, the network test system of the comparative example must be tested using two network devices divided into a master and a slave as described above, and accordingly, it takes a lot of cost and time to proceed with the test, and there is a problem that multiple products cannot be tested simultaneously. Furthermore, if the network test system of the comparative example transmits a complex test packet, there is a problem in that a verification process is complicated.

Furthermore, producers generally want to produce a network unit that includes only the media access control layer and perform testing using only the produced network unit (physical layer not included or not connected). However, in the comparative example, there is a problem that the network unit including only the media access control layer cannot be operated alone and the test cannot be performed. Furthermore, in the comparative example, there is a problem that the test of the network unit cannot be performed by applying any one of various test modes.

Accordingly, the embodiment allows the test of the media access control layer to be performed even when the physical layer is not connected to the media access control layer. The embodiment allows supporting various test modes depending on the network environment of the media access control layer.

FIG. 2 is a schematic diagram of a network test device according to an embodiment.

Referring to FIG. 2, the network test device may include a network unit 100 and a test environment configuration unit 200.

The network unit 100 may mean a network device to be tested. For example, the network unit 100 may mean a unit including a media access control layer 110.

Specifically, the network unit 100 may mean a controller unit implemented by including the media access control layer 110. That is, the network unit 100 may mean a controller unit, and the controller unit may be implemented by including the media access control layer 110.

The network unit 100 may be connected to the physical layer in an actually constructed network environment. In addition, the network unit 100 may control the physical layer and perform various functions (for example, an infotainment function).

In this case, in a general network device, the network unit 100, which is a controller unit including the media access control layer 110, may be implemented as a single system on chip (SoC) with the physical layer.

However, the network device in the embodiment allows the network unit 100, which is a controller unit including the media access control layer 110, to be configured as a chip separate from the physical layer.

That is, in an embodiment, a controller unit including the media access control layer 110 may be manufactured as a single network unit, and a physical layer may be manufactured separately from the controller unit.

In addition, the embodiment builds a test environment so that an independent test may be performed on the network unit 100 that does not include the physical layer.

For example, the embodiment allows the network environment of the network unit 100 to be recognized for the test of the network unit 100 and to proceed with the test of the network unit 100 in any one of various test modes according to the recognized network environment.

Meanwhile, the network unit 100 may be connected to the physical layer through a media independent interface (MII). To this end, the network unit 100 may include a plurality of pins (to be described later) corresponding to the media independent interface. Preferably, the media access control layer 110 of the network unit 100 may include a plurality of pins connected to the physical layer according to a network construction environment.

In this case, the medium independent interface may refer to an interface defined in IEEE 8023. Accordingly, the embodiment may include a data interface and a management interface between the network unit 100 and the physical layer. However, the embodiment is not limited thereto, and the network unit 100 and the physical layer may be connected through one of reduced MII (RMII), gigabit MII (GMII), reduced GGMII (RGMII), serial GMII (SGMII), and XGMII (10GMII). In this case, the data interface may include a transmission channel and a reception channel, and each of the channels may have an independent clock signal, an independent data signal, and an independent control signal. The management interface may be composed of two signal interfaces, one of the two signal interfaces may be a signal for clock and the other of the two signal interfaces may be a signal for data.

The test environment configuration unit 200 is connected to the network unit 100. In addition, the test environment configuration unit 200 constitutes an environment for testing the network unit 100. For example, the test environment configuration unit 200 may provide a test line connected to a plurality of pins of the media access control layer 110 of the network unit 100. In this case, a plurality of test lines may be provided. For example, in an embodiment, the test environment configuration unit 200 supports a plurality of test modes for testing the network unit 100. To this end, the test environment configuration unit 200 may include a plurality of test lines corresponding to the plurality of test modes.

The test environment configuration unit 200 may mean a jig on which the network unit 100 is mounted. For example, the test environment configuration unit 200 may include a test line, and accordingly, may mean a test jig that allows testing of the network unit 100 to be performed through the test line as the network unit 100 is mounted.

Hereinafter, each configuration of the network test device according to an embodiment will be described in more detail.

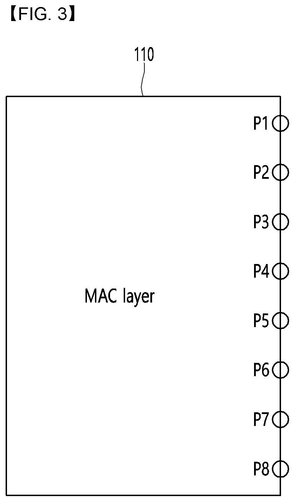

FIG. 3 is a diagram for describing an interface of a media access control layer included in a network unit of FIG. 2.

Referring to FIG. 3, the network unit 100 includes a media access control layer 110. In addition, the media access control layer 110 may include a plurality of pins. For example, the media access control layer 110 may include pins of a first group corresponding to a data interface and pins of a second group corresponding to a management interface.

The pins of the first group may include a transmission pin corresponding to a transmission channel and a reception pin corresponding to a reception channel through which packet data is transmitted and received between the media access control layer 110 and a physical layer. In this case, the embodiment may use a differential signal to transmit and receive the packet data. Accordingly, each of the transmission pin and the reception pin may be configured in plural numbers to transmit and receive the differential signal.

For example, the media access control layer 110 may include a first transmission pin P1 and a second transmission pin P2. The first transmission pin P1 and the second transmission pin P2 may output packet data to be transmitted as the differential signal.

Also, the media access control layer 110 may include a first reception pin P3 and a second reception pin P4. The first reception pin P3 and the second reception pin P4 may receive packet data transmitted as the differential signal.

In addition, the media access control layer 110 may include a reset pin P5 for resetting the physical layer. Also, the media access control layer 110 may include an interrupt pin P6 for transmitting an interrupt signal to the physical layer.

Accordingly, the pins of the first group of the media access control layer 110 may include the first transmission pin P1, the second transmission pin P2, the first reception pin P3, the second reception pin P4, the reset pin P5, and the interrupt pin P6.

In addition, the media access control layer 110 includes a second group of pins corresponding to a management interface. Specifically, the media access control layer 110 may include a management data pin P7 connected to the physical layer to transmit and receive data in both directions. The management data pin P7 may be a management data input/output (MDIO) pin. The media access control layer 110 may read state information of the physical layer using the management data pin P7 corresponding to the MDIO pin. Also, the media access control layer 110 may change arrangement information of the physical layer using the management data pin P7. The media access control layer 110 may perform bidirectional communication with the physical layer using the management data pin P7.

In addition, the media access control layer 110 may include a clock pin P8 for providing a reference clock signal to the physical layer. The clock pin P8 may be a management data clock (MDC) pin.

The media access control layer 110 includes a first transmission pin P1, a second transmission pin P2, a first reception pin P3, and a second reception pin P4 as described above. In addition, the media access control layer 110 may transmit a test packet through the first transmission pin P1 and the second transmission pin P2. In addition, the media access control layer 110 may receive a response packet corresponding to the transmitted test packet through the first reception pin P3 and the second reception pin P4. Here, the response packet may refer to a test packet corresponding to the transmitted test packet. For example, in an embodiment, a test packet is transmitted through the first transmission pin P1 and the second transmission pin P2 of the media access control layer 110. In addition, the network unit 100 may receive the same test packet as the transmitted test packet through the first reception pin P3 and the second reception pin P4 of the media access control layer 110. In addition, the network unit 100 may perform a test of an operation state and a network environment of the network unit 100 by comparing the transmitted test packet with the received test packet. In this case, the test packet received through the first reception pin P3 and the second reception pin P4 of the media access control layer 110 of the network unit 100 may be transmitted from different targets according to a test mode.

For example, the embodiment supports the first to third test modes.

The first test mode may mean a mode in which a physical layer is connected to the network unit 100 and, accordingly, a test is performed in a state in which a target network unit corresponding to the network unit 100 is provided.

In addition, the second test mode may mean a mode in which the network unit 100 independently performs a self-test without a physical layer connected to the network unit 100.

In addition, the third test mode may refer to a mode in which a test can be performed by exchanging test packets with the same subnetwork unit as the network unit 100 while the physical layer is not connected to the network unit 100.

And the test environment configuration unit 200 configures a test line corresponding thereto according to the first to third test modes. A test environment including a test line configured through the test environment configuration unit 200 will be described below.

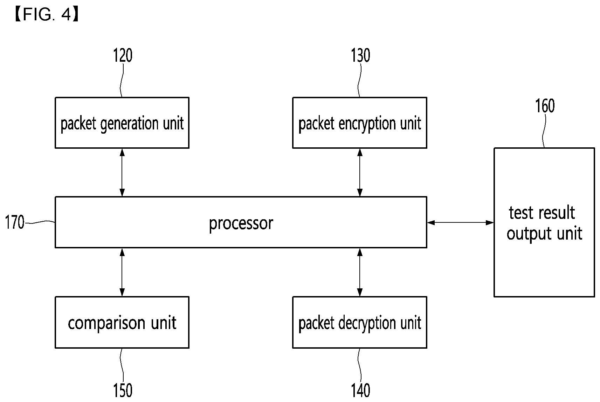

FIG. 4 is a diagram specifically illustrating a controller unit of a network unit according to an embodiment.

Referring to FIG. 4, the embodiment may include a packet generation unit 120, a packet encryption unit 130, a packet decryption unit 140, a comparison unit 150, a test result output unit 160, and a processor 170 to perform a test of the network unit 100.

The packet generation unit 120 may generate a test packet for performing a test of the network unit 100. The packet generation unit 120 may generate random data for performing a test of the network unit 100. In this case, the test packet may have a predetermined size. In this case, if the test packet is too simple, the accuracy of the test result according to an embodiment may be deteriorated. In addition, if the test packet is too complicated, a time required to perform a test according to an embodiment may increase. Accordingly, the packet generation unit 120 may generate a random test packet having a size of 10 to 20 bytes.

The packet encryption unit 130 may receive a test packet generated through the packet generation unit 120. In addition, the packet encryption unit 130 may encrypt the received test packet. In this case, the packet encryption unit 130 may selectively encrypt the test packet through any one of a plurality of encryption algorithms.

In this case, the embodiment may encrypt the test packet by applying different encryption algorithms according to the test mode. That is, the test mode is determined according to the test environment constructed to perform the test of the network unit 100. Accordingly, the embodiment may increase test accuracy by applying different encryption algorithms according to the test mode to perform the test of the network unit 100. For example, the embodiment may encrypt the test packet by applying a first encryption algorithm in the first test mode. For example, the embodiment may encrypt the test packet by applying a second encryption algorithm different from the first encryption algorithm in the second test mode. For example, the embodiment may encrypt the test packet by applying a third encryption algorithm different from the first and second encryption algorithms in the third test mode.

Accordingly, an embodiment may encrypt the test packet by applying an optimal encryption algorithm according to the test environment, and may significantly shorten the test time while increasing test accuracy accordingly.

Meanwhile, an embodiment is not limited thereto, and according to an embodiment, the encryption algorithm of the test packet may be the same regardless of the test mode. In addition, the embodiment may encrypt the test packet by randomly determining the encryption algorithm regardless of the test mode.

In this case, the embodiment encrypts the test packet as described above so that test accuracy may be increased accordingly.

For example, when a payload of the test packet generated through the packet generation unit 120 is short or simple (e.g., in a case of a Oxffff packet), it is difficult to distinguish between packets due to signal distortion and the test packet. Accordingly, the embodiment proceeds to encrypt the test packet through the packet encryption unit 130 and proceeds to decrypt the received test packet. Accordingly, the embodiment may transmit and receive more complex data and secure test reliability accordingly.

Meanwhile, the test packet encrypted through the packet encryption unit 130 may be transmitted through the first transmission pin P1 and the second transmission pin P2 of the media access control layer 110.

The packet decryption unit 140 may decrypt the received test packet. For example, the packet decryption unit 140 may receive a test packet that is encrypted and transmitted, and may decrypt the received test packet. In this case, the packet decryption unit 140 may decrypt the received test packet by applying a decryption algorithm corresponding to the encryption algorithm used in the packet encryption unit 130.

In this case, the packet decryption unit 140 may receive the test packet through the first reception pin P3 and the second reception pin P4 of the media access control layer 110.

The comparison unit 150 may compare the transmitted test packet with the received test packet. For example, the comparison unit 150 may compare whether the test packet transmitted through the transmission pin P1 and P2 is the same as the test packet received through the reception pin P3 and P4.

In addition, the comparison unit 150 may provide information corresponding to a comparison result to the processor 170.

For example, the comparison unit 150 may provide information on whether the transmitted test packet and the received test packet match and the degree of match to the processor 170.

The test result output unit 160 may output a test result performed according to an embodiment. In this case, the test result output unit 160 may be implemented as an image output unit for outputting an image or an audio output unit for outputting an audio. Alternatively, the test result output unit 160 may be implemented as a light output unit for outputting different lights according to test results.

The processor 170 may control an overall test operation of the network unit 100 according to an embodiment.

Specifically, the processor 170 may recognize the test environment of the network unit 100. In this case, the recognition of the test environment may be made based on a signal transmitted from the outside to a specific pin of the processor 170. Also, the recognition of the test environment may be made using information obtained through a specific pin of the media access control layer 110. This will be described in more detail below.

When the test environment is recognized, the processor 170 may load a program for performing a specific test mode according to the recognized test environment. For example, the processor 170 may store operation programs corresponding to the first to third test modes. In addition, the processor 170 may load any one of the stored operation programs according to the recognized test environment. In addition, the processor 170 may allow the network unit 100 to perform a test based on the loaded operation program.

When the test mode is determined, the processor 170 allows a test packet for performing a test to be generated through the packet generation unit 120. In addition, the processor 170 allows encryption of the generated test packet through the packet encryption unit 130. To this end, the processor 170 selects a specific encryption algorithm among a plurality of encryption algorithms using the determined test mode or random, and allows encryption of the test packet to be performed based on the selected encryption algorithm.

Thereafter, the processor 170 allows the test packet encrypted through the packet encryption unit 130 to be transmitted through the transmission pins P1 and P2 of the media access control layer 110. In this case, a reception destination of the test packet transmitted through the transmission pins P1 and P2 may vary according to the determined test mode. This will be described in detail below.

In addition, when a test packet is received through the reception pin P3 and P4, the processor 170 transfers the received test packet to the packet decryption unit 140. In addition, the processor 170 allows the received test packet to be decrypted through the packet decoder 140. At this time, the processor 170 can select a decryption algorithm corresponding to the encryption algorithm applied to the packet encryption unit 130 and control the packet decryption unit 140 to decrypt the received test packet based on (or based on) the selected decryption algorithm.

In addition, the processor 170 may control the comparison unit 150 to compare whether the transmitted test packet and the received test packet match. In addition, the processor 170 may receive comparison result information through the comparison unit 150 and determine whether the network unit 100 operates normally and a state of the network line based on this. In addition, the processor 170 may allow information on the determined state to be output through the test result output unit 160.

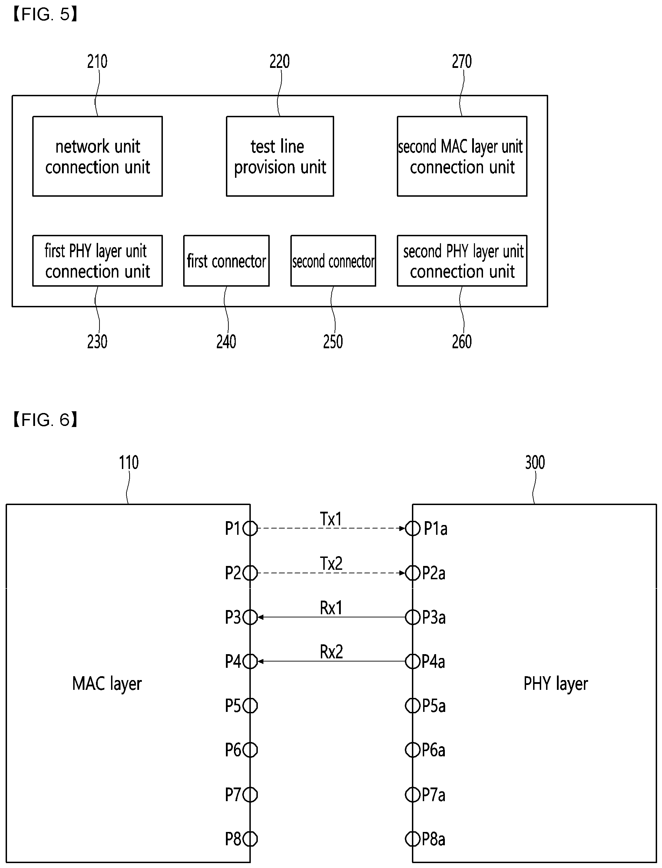

FIG. 5 is a diagram illustrating a test environment configuration unit of FIG. 2 according to an embodiment.

Referring to FIG. 5, the test environment configuration unit 200 may include a network unit connection unit 210, a test line provision unit 220, a first PHY layer unit connection unit 230, a first connector 240, a second connector 250, a second PHY layer unit connection unit 260 and a second MAC layer unit connection unit 270.

Before explaining below, the test environment configuration unit 200 shown in FIG. 5 configures a test environment for testing the network unit 100. In this case, the test environment configuration unit 200 may be a jig including a mounting portion on which the network unit 100 to be tested is mounted. In this case, the test environment configuration unit 200 may be configured as a jig divided according to the test mode of the network unit 100, and differently, may be configured as a single integral jig capable of providing all three test modes.

For example, the test environment configuration unit 200 may include a first unit constituting a first test environment corresponding to the first test mode, a second unit constituting a second test environment corresponding to the second test mode, and a third unit constituting a third test environment corresponding to the third test mode.

Alternatively, the test environment configuration unit 200 may include one integrated unit selectively providing first to third test environments corresponding to the first to third test modes.

Hereinafter, it will be described that the test environment configuration unit 200 selectively provides the first to third test environments in order to support all of the first to third test modes. However, the embodiment is not limited thereto, and the test environment configuration unit 200 may be divided into three units and separated.

The test environment configuration unit 200 includes a network unit connection unit 210. The network unit connection unit 210 may be connected to the network unit 100 to be tested. For example, the network unit connection unit 210 may be a mounting unit on which the network unit 100 to be tested is mounted. The embodiment allows the network unit 100, which has been manufactured and is to be tested, to be mounted on the network unit connection unit 210 of the test environment configuration unit 200, and accordingly, testing of the network unit 100 can be performed.

The network unit connection unit 210 may include a connection terminal (not shown) connected to the network unit 100. For example, the network unit connection unit 210 may include first to eighth connection terminals connected to a first transmission pin P1, a second transmission pin P2, a first reception pin P3, a second reception pin P4, a reset pin P5, an interrupt pin P6, a management data pin P7, and a clock pin P8, respectively.

The test line provision unit 220 may be connected to the network unit connection unit 210. The test line provision unit 220 may provide a test line for testing the network unit 100 connected to the network unit connection unit 210.

That is, the test line provision unit 220 may provide a first test line for testing the network unit 100 in the first test mode.

In addition, the test line provision unit 220 may provide a second test line for testing the network unit 100 in the second test mode.

In addition, the test line provision unit 220 may provide a third test line for testing the network unit 100 in the third test mode.

The test line provision unit 220 may include a switch (not shown), and may connect any one of the first to third test lines to the network unit connection unit 210 in response to the test mode of the network unit 100.

On the other hand, if the test environment configuration unit 200 is configured as a unit divided to correspond to each test mode, each unit may include only one of the first to third test lines.

The first to third test lines provided by the test line provision unit 220 will be described below.

The first PHY layer unit connection unit 230 may be a mounting unit on which a first physical layer is mounted. That is, the first PHY layer unit connection unit 230 may connect the network unit 100 connected to the network unit connection unit 210 and the first physical layer. To this end, the first PHY layer unit connection unit 230 may include an interface line (not shown) connecting the network unit 100 mounted on the network unit connection unit 210 and a first physical layer. A first physical layer may be selectively mounted on the first PHY layer unit connection unit 230. For example, when the network unit 100 is to be tested in the first test mode, a first physical layer may be mounted on the first PHY layer unit connection unit 230.

The first connector 240 may be connected to the first PHY layer unit connection unit 230. The first connector 240 may be a connector connecting the first PHY layer unit connection unit 230 and an Ethernet network line. For example, the first connector 240 may refer to a connector into which one end of an Ethernet network port (not shown) is inserted.

The second connector 250 may be connected to the first connector 240. For example, the second connector 250 may be a connector that connects the first physical layer and a second network device set as a slave through an Ethernet network line. For example, the second connector 250 may refer to a connector into which the other end of an Ethernet network port (not shown) is inserted.

The second PHY layer unit connection unit 260 may be a mounting unit on which a second physical layer is mounted. That is, a second physical layer can be mounted on the second PHY layer unit connection unit 260. Accordingly, the first physical layer connected to the first PHY layer unit connection unit 230 and the second physical layer can be connected through an Ethernet network line. For example, the second physical layer may be selectively mounted on the second PHY layer unit connection unit 260. For example, when the network unit 100 is to be tested in the first test mode, the second physical layer of the second network device set as a slave may be mounted in the second PHY layer unit connection unit 260.

The second MAC layer unit connection unit 270 may be a mounting unit on which a second media access control layer is mounted. For example, the second MAC layer unit connection unit 270 may be a unit in which a media access control layer of a second network device to be a counterpart may be mounted for testing the network unit 100. For example, the second MAC layer unit connection unit 270 may be a mounting unit on which a controller unit including a media access control layer of a second network device set as a slave is mounted. The media access control layer mounted on the second MAC layer unit connection unit 270 may be a network unit composed of a controller unit including a media access control layer, similar to the network unit described above.

The second media access control layer mounted on the second MAC layer unit connection unit 270 may be referred to as a slave media access control layer.

The slave media access control layer mounted on the second MAC layer unit connection unit 270 may be connected to the test line provision unit 220 according to the test mode, and differently connected to the second PHY layer unit connection unit 260 according to the test mode.

That is, the slave media access control layer mounted on the second MAC layer unit connection unit 270 may be connected to the second physical layer mounted on the second PHY layer unit connection unit 260 in the first test mode.

In addition, the slave media access control layer mounted on the second MAC layer unit connection unit 270 may be connected to the network unit 100 mounted on the network unit connection unit 210 through the test line provision unit 220 in the third test mode.

The embodiment provides a test environment configuration unit 200 for testing the network unit 100 as described above. In this case, the test environment configuration unit 200 may include a mounting unit on which a product to be a counterpart of the network unit 100 is mounted to support various test modes of the network unit 100. In addition, the test environment configuration unit 200 may provide first to third test lines corresponding to the first to third test modes of the network unit 100.

Hereinafter, a test line provided by the test line provision unit 220 will be described.

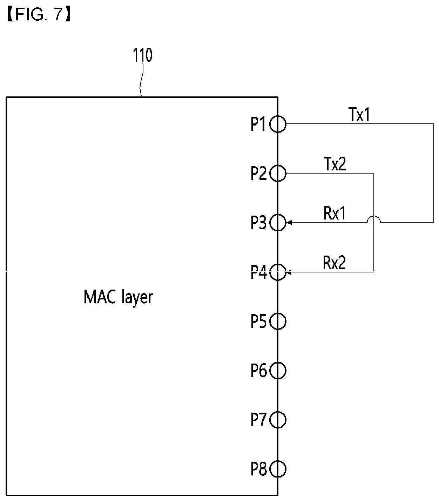

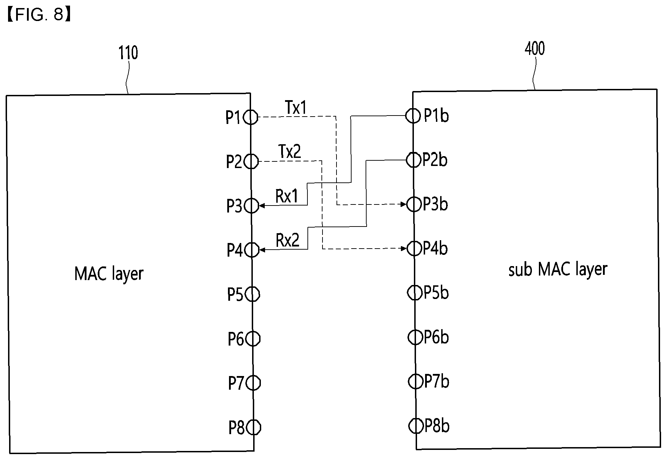

FIG. 6 is a diagram for describing a first test line according to an embodiment., FIG. 7 is a diagram illustrating a second test line according to an embodiment, and FIG. 8 is a diagram illustrating a third test line according to an embodiment.

Referring to FIG. 6, the first test line forms a test path for testing the network unit 100 in the first test mode.

In this case, in the first test mode, a test may be performed in a state in which the first physical layer is connected to the network unit 100. In addition, the first test mode may be tested while a second network device or a second physical layer and second media access control layer of a slave network device corresponding to the first physical layer is connected to the first physical layer.

Accordingly, the first test line may connect the network unit 100 mounted on the network unit connection unit 210 and the first physical layer mounted on the first PHY layer unit connection unit 230.

Specifically, the first physical layer may include a plurality of pins.

For example, the first physical layer may include first to eighth fins P1a, P2a, P3a, P4a, P5a, P6a, P7a, and P8a.

The first physical layer includes a first fin P1a and a second fin P2a that receive a data packet in a differential signal. In addition, the first physical layer may include a third fin P3a and a fourth fin P4a that transmit a data packet in a differential signal.

Also, the first physical layer may include a fifth pin P5a connected to the reset pin P5 of the network unit 100. Also, the first physical layer may include a sixth pin P6a connected to the interrupt pin P6 of the network unit 100. Also, the first physical layer may include a seventh pin P7a connected to the management data pin P7 of the network unit 100. Also, the first physical layer may include an eighth pin P8a connected to the clock pin P8 of the network unit 100.

In addition, the first test line may include first lines Tx1 and Tx2 for transmitting a test packet transmitted from the first media access control layer 110 of the network unit 100 to the first physical layer. The first lines Tx1 and Tx2 may include a first-first line Tx1 and a first-second line Tx2 for transmitting the test packet as a differential signal.

The first-first line Tx1 may connect the first transmission pin P1 of the first media access control layer 110 of the network unit 100 and the first pin P1a of the first physical layer. In addition, the first-second line Tx2 may connect the second transmission pin P2 of the first media access control layer 110 of the network unit 100 and the second pin P2a of the second physical layer. The first-first line Tx1 and the first-second line Tx2 may transfer a test packet provided from the first media access control layer 110 of the network unit 100 to the first physical layer in the first test mode.

In addition, the first test line may include second lines Rx1 and Rx2 for transmitting a test packet received through the first physical layer to the first media access control layer 110 of the network unit 100. The second lines Rx1 and Rx2 may include a second-first line Rx1 and a second-second line Rx2 for transmitting the test packet in a differential signal.

The second-first line Rx1 may connect the first reception pin P3 of the first media access control layer 110 of the network unit 100 and the third pin P3a of the first physical layer. In addition, the second-second line Rx2 may connect the second reception pin P4 of the network unit 100 and the fourth pin P4a of the first physical layer. The second-first line Rx1 and the second-second line Rx2 may transmit a test packet transmitted from the slave network device to the first media access control layer 110 of the network unit 100, in the first test mode.

The first media access control layer 110 of the network unit 100 is connected to the first physical layer through the first test line in the first test mode. Accordingly, the first media access control layer 110 of the network unit 100 may transmit a test packet to the first physical layer and receive a test packet transmitted from the first physical layer in the first test mode.

Meanwhile, referring to FIG. 7, the second test line serves as a test path for testing the network unit 100 in the second test mode.

In this case, the second test mode may mean a mode in which the network unit 100 independently performs a test while the first physical layer is not connected to the network unit 100.

Accordingly, the second test line may connect between the transmission pin and the reception pin of the first media access control layer 110 of the network unit 100.

For example, the second test line may include first lines TX1 and Rx1 and second lines Tx2 and Rx2.

The first lines Tx1 and Rx1 may directly connect the first transmission pin P1 and the first reception pin P3 of the first media access control layer 110 of the network unit 100.

In addition, the second lines Tx2 and Rx2 may directly connect the second transmission pin P2 and the second reception pin P2 of the first media access control layer 110 of the network unit 100.

Accordingly, in the second test mode, the network unit 100 may directly receive test packets output from the first transmission pin P1 and the second transmission pin P2 through the first reception pin P3 and the second reception pin P4.

Meanwhile, referring to FIG. 8, the third test line forms a test path for testing the network unit 100 in the third test mode.

In this case, the third test mode may be a mode for performing a test using test packets exchanged between the network unit 100 and the sub-media access control layer 400 (e.g., slave media access control layer) while the first physical layer is not connected to the network unit 100.

Accordingly, the third test line may include first lines Tx1 and Tx2 connecting the transmission pin of the first media access control layer 110 of the network unit 100 and the reception pin of the sub media access control layer 400. Also, the third test line may include second lines Rx1 and Rx2 connecting the reception pin of the first media access control layer 110 of the network unit 100 and the transmission pin of the sub media access control layer 400.

For example, the sub-media access control layer 400 has pins corresponding to a plurality of pins included in the first media access control layer 110 of the network unit 100.

For example, the sub-media access control layer 400 may include a first' transmission pin P1b corresponding to the first transmission pin P1 of the first media access control layer 110, a second' transmission pin P2b corresponding to the second transmission pin P2, a first' reception pin P3b corresponding to the first reception pin P3, a second' reception pin P4b corresponding to the second reception pin P4, a reset pin P5b corresponding to the reset pin P5, an interrupt pin P6b corresponding to the interrupt pin P6, a management data pin P7b corresponding to the management data pin P7, and a clock pin P8' corresponding to the clock pin P8.

In addition, the first line includes a first-first line Tx1 connecting the first transmission pin P1 and the first' reception pin P3b, and a first-second line Tx2 connecting the second transmission pin P2 and the second' reception pin P4b. In addition, the second line may include a second-first line Rx1 connecting the first reception pin P3 and the first' transmission pin P1b, and a second-second line Rx2 connecting the second reception pin P4 and the second' transmission pin P2b.

Accordingly, in the third test mode, the network unit 100 transmits a test packet to the sub-media access control layer 400 through the third test line. Thereafter, the network unit 100 receives a test packet transmitted from the sub-media access control layer 400. Thereafter, the network unit 100 may compare the transmitted test packet with the received test packet to perform a test.

A network unit according to an embodiment may include a controller unit implemented including a media access control layer. In this case, the network unit may operate under different conditions according to an established network environment. Accordingly, the embodiment may configure a test environment corresponding to a network environment in which the network unit operates, and allow the test of the network unit to be performed in the configured test environment. Accordingly, the embodiment may perform a test corresponding to the network environment in which the network unit is actually used, and accordingly, the test accuracy of the network unit may be improved.

In addition, the embodiment recognizes a first state in which the physical layer is connected to the network unit, a second state in which the physical layer is not connected, and a third state in which a sub media access control layer is connected, and determines a test mode of the network unit based on a recognition result. Specifically, the network unit in the embodiment supports first to third test modes. In addition, the network unit may recognize the currently configured test environment and enter a test mode corresponding to the recognized test environment to proceed with the test of the network unit. Accordingly, the embodiment may shorten a test progress time, thereby improving the productivity of the network unit.

Furthermore, an embodiment may perform a test on one network unit in various test environments, thereby improving product reliability and product satisfaction of the network unit.

Hereinafter, a method of determining a test mode according to an embodiment and a method of performing a test of a network unit according to the determined test mode will be described.

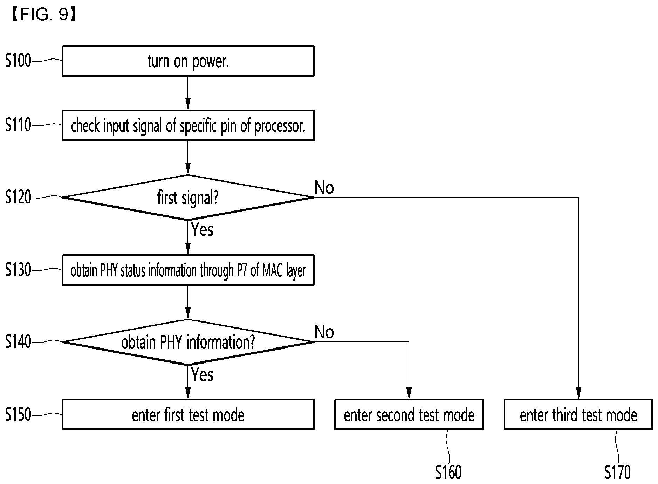

FIG. 9 is a flowchart for step-by-step explaining a method for determining a test mode of a network test device according to an embodiment.

Referring to FIG. 9, in the embodiment, while the network unit 100 is mounted on the test environment configuration unit 200, the test of the network unit 100 may be performed through the operation of the processor 170 of the network unit 100.

To this end, in an embodiment, when the network unit 100 is mounted on the test environment configuration unit 200, power may be supplied (power turned-on) to the mounted network unit 100 (S100).

Thereafter, the embodiment checks an input signal input through a specific pin of the processor 170 constituting the controller unit of the network unit 100 (S110). For example, the embodiment connects a specific pin of a general-purpose input/output (GPIO) of the processor 170 with a specific pin of the test environment configuration unit 200. In addition, the embodiment may provide a basic signal for determining a test mode through a specific pin of the GPIO of the processor 170. For example, the test environment configuration unit 200 may include a pull-up circuit or a pull-down circuit. In addition, the embodiment may provide a high-level signal or a low-level signal to a specific pin of the GPIO of the processor 170 through the pull-up circuit or the pull-down circuit.

For example, recently, a network environment is being built so that data can be transmitted and received directly between controller units, including a media access control layer between a plurality of network devices, without a physical layer. For example, in new network standards such as HDBASE-T, media access control layers are directly connected to each other without a physical layer and exchange signals with each other through a virtual physical layer driver.

Accordingly, the embodiment allows a network test between the media access control layers to be performed when the test of the network unit 100 is performed.

Thus, when a network test between media access control layers is to be performed, the embodiment provides a high-level signal or a low-level signal for this to a specific pin of the processor 170 of the network unit 100.

Accordingly, the processor 170 determines whether the signal input through the specific pin of the GPIO is a first signal (S120). For example, the processor 170 may determine whether a second signal requesting to proceed to the third test mode for the MAC-MAC test is received, or a first signal requesting to proceed to the first or second test mode is received.

In addition, when the signal obtained through the specific pin of the GPIO is the first signal, the processor 170 obtains state information of the physical layer through the management data pin P7 of the first media access control layer 110 (S130). For example, when the first physical layer connected to the network unit 100 exists, the processor 170 may read identification information of the connected physical layer through the management data pin P7.

Thereafter, the processor 170 determines whether identification information of the first physical layer has been obtained through the management data pin P7 (S140). For example, the processor 170 may determine whether a first physical layer connected to the network unit 100 exists based on whether identification information of the first physical layer is obtained.

Next, when identification information of the first physical layer is obtained (or when the connected first physical layer is present), the processor 170 enters the first test mode and proceeds with the test of the network unit 100 in the first test mode (S150).

In addition, when the identification information of the first physical layer is not obtained (or the connected first physical layer does not exist), the processor 170 enters the second test mode and proceeds with the test of the network unit 100 in the second test mode (S160).

In addition, when the second signal is input through the specific pin of the GPIO, the processor 170 enters the third test mode and proceeds with the test of the network unit 100 in the third test mode (S170).

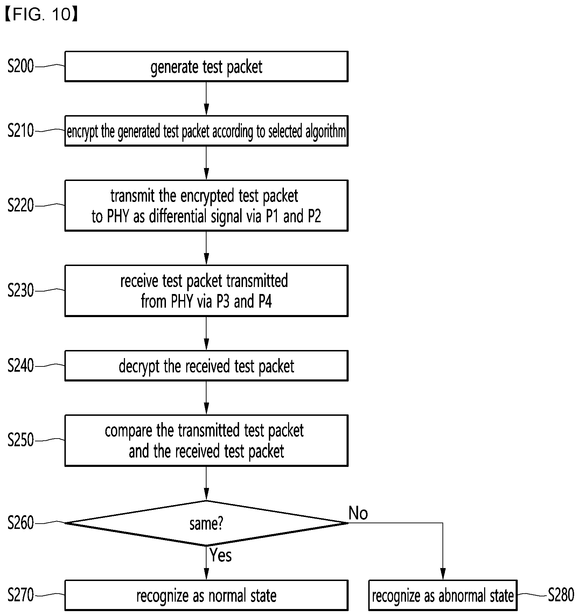

FIG. 10 is a flowchart for step-by-step explaining a first test method according to an embodiment. In detail, FIG. 10 is a flowchart illustrating the test method of the network unit 100 according to the first test mode.

Referring to FIG. 10, the network unit 100 according to an embodiment may enter the first test mode when a first signal (e.g., a low-level signal) is input through a specific pin of the GPIO of the processor 170 and identification information of the physical layer is obtained through the management data pin P7 of the media access control layer 110. Accordingly, the processor 170 may load a driver for performing the first test mode.

Thereafter, the packet generation unit 120 of the network unit 100 in an embodiment generates a test packet to proceed with a test according to the first test mode (S200). In this case, the packet generation unit 120 may generate a random test packet.

Next, the packet encryption unit 130 of the network unit 100 in an embodiment receives a test packet generated through the packet generation unit 120. In addition, the packet encryption unit 130 encrypts the test packet (S210). To this end, the processor 170 of the network unit 100 selects an encryption algorithm for performing encryption through the packet encryption unit 130, and allows the test packet to be encrypted through the packet encryption unit 130 according to the selected encryption algorithm. In this case, the selection of the encryption algorithm may be made randomly. Alternatively, the selection of the encryption algorithm in an embodiment may be made according to a test mode.

Next, the media access control layer 110 of the network unit 100 may transmit the encrypted test packet through the transmission pins P1 and P2 (S220). In this case, the media access control layer 110 is connected to the first physical layer, and accordingly, the encrypted test packet may be transmitted to the connected first physical layer.

Next, the media access control layer 110 of the network unit 100 receives a test packet transmitted from the first physical layer through the reception pin P3 P4. Specifically, the first physical layer may receive a test packet transmitted from the media access control layer 110 and transmit the received test packet to a slave network device connected through an Ethernet network line or a second physical layer of the second network device. In this case, when the test packet is received, the slave network device or the second network device may transmit a test packet corresponding to the received test packet (e.g., the same) to the first physical layer again. For example, when the test packet is received, the slave network device or the second network device may transmit the received test packet to the first physical layer again. The first physical layer may receive a test packet transmitted from the slave network device or the second network device and transmit the test packet to the media access control layer 110 of the network unit 100.

Next, the packet decryption unit 140 of the network unit 100 decrypts the received test packet (S240). For example, the packet decryption unit 140 may decrypt the received test packet using a decryption algorithm corresponding to the encryption algorithm used in the packet encryption unit 130.

Next, the comparison unit 150 of the network unit 100 compares the test packet transmitted from the media access control layer 110 with the received test packet and outputs comparison result information to the processor 170 (S250). For example, the comparison unit 150 may compare the test packet generated in the packet generation unit 120 with the test packet decoded by the packet decryption unit 140 and output comparison result information thereof.

Next, the processor 170 of the network unit 100 may receive the comparison result information and determine a test result based on the comparison result information. For example, the processor 170 of the network unit 100 may determine whether the transmitted test packet is the same as the received test packet according to the comparison result (S260).

Next, when the transmitted test packet and the received test packet are the same, the processor 170 determines that the test result is normal, and accordingly, test result information corresponding thereto is output through the test result output unit 160 (S270).

In addition, when the transmitted test packet and the received test packet are different from each other, the processor 170 determines that the test result is abnormal, and accordingly, test result information corresponding thereto is output through the test result output unit 160 (S280).

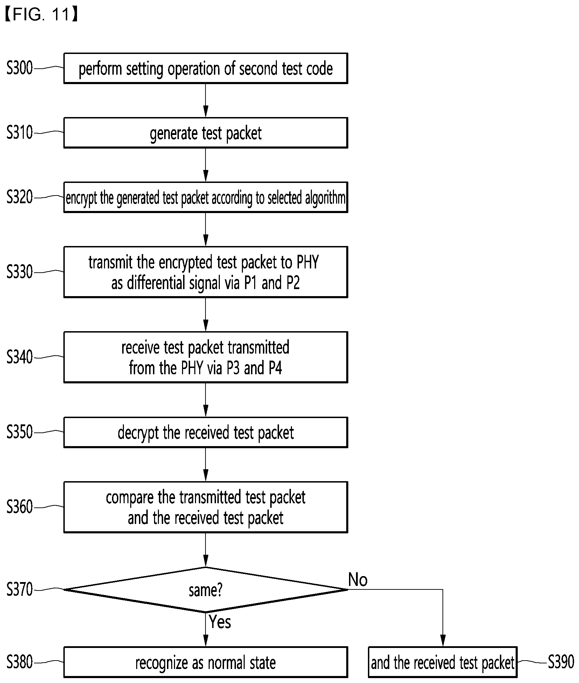

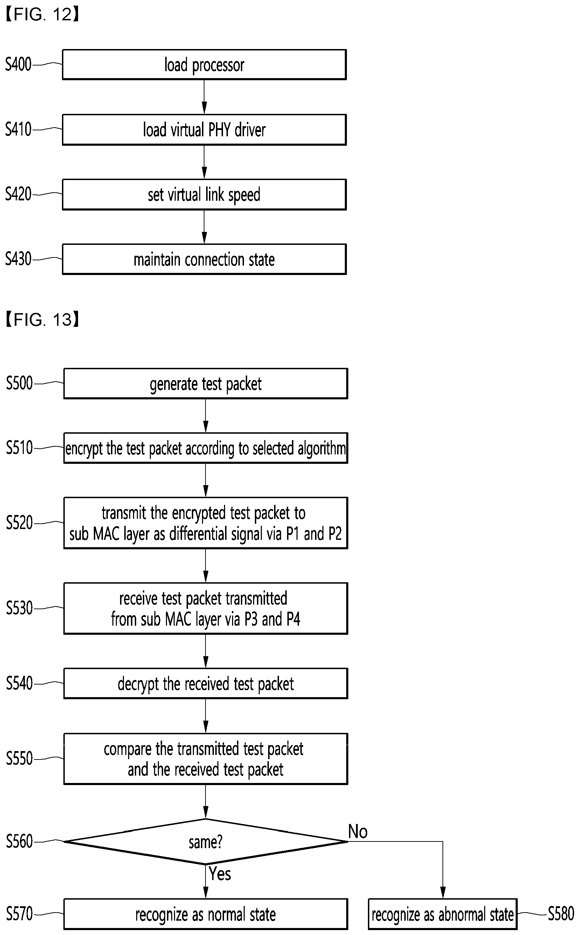

FIG. 11 is a flowchart for step-by-step explaining a second test method according to an embodiment, and FIG. 12 is a flowchart for step-by-step explaining an setting operation of FIG. 11. In detail, FIG. 11 is a flowchart illustrating the test method of the network unit 100 according to the second test mode. In addition, FIG. 12 is a flowchart illustrating the operation of S300 of FIG. 11 in more detail.

Referring to FIG. 11, the network unit 100 according to an embodiment may enter the second test mode when a first signal (e.g., a low-level signal) is input through a specific pin of the GPIO of the processor 170 and identification information of the physical layer is not obtained through the management data pin P7 of the media access control layer 110 (e.g., when the connected physical layer does not exist). Accordingly, the processor 170 may load a driver to proceed with the second test mode.

Thereafter, the processor 170 of the network unit 100 in the embodiment performs a setting operation for executing the second test mode (S300). The setting operation may be identically performed even in the third test mode described below. The setting operation may mean an operation in which the physical layer is virtually connected because the physical layer connected to the media access control layer 110 of the network unit 100 does not exist. The setting operation will be described later with reference to FIG. 12.

When the setting operation is performed, the packet generation unit 120 generates a test packet to perform a test according to the second test mode (S310). In this case, the packet generation unit 120 may generate a random test packet. In this case, the packet generation unit 120 may generate different test packets according to the test mode. Alternatively, the packet generation unit 120 may generate a random test packet regardless of the test mode.

Next, the packet encryption unit 130 of the network unit 100 in an embodiment receives a test packet generated through the packet generation unit 120. In addition, the packet encryption unit 130 encrypts the test packet (S320). To this end, the processor 170 of the network unit 100 selects an encryption algorithm for performing encryption through the packet encryption unit 130 and allows encryption of the test packet to be performed through the packet encryption unit 130 according to the selected encryption algorithm. In this case, the selection of the encryption algorithm may be made randomly. Alternatively, the selection of the encryption algorithm in an embodiment may be made according to a test mode.

Next, the media access control layer 110 of the network unit 100 may transmit the encrypted test packet through the transmission pins P1 and P2 (S330).

In this case, the media access control layer 110 is directly connected to each other of the transmission pin and the reception pin. Accordingly, the test packet transmitted through the transmission pin P1 and P2 of the media access control layer 110 of the network unit 100 may be directly received through the reception pins P3 and P4 of the media access control layer 110 (S340).

Next, the packet decoder 140 of the network unit 100 decrypts the received test packet (S350). For example, the packet decoder 140 may decrypt the received test packet using a decryption algorithm corresponding to the encryption algorithm used in the packet encryption unit 130.

Next, the comparison unit 150 of the network unit 100 compares the test packet transmitted from the media access control layer 110 with the received test packet and outputs comparison result information to the processor 170 (S360). For example, the comparison unit 150 may compare the test packet generated in the packet generation unit 120 with the test packet decoded by the packet decryption unit 140 and output comparison result information thereof.

Next, the processor 170 of the network unit 100 may receive the comparison result information and determine a test result based on the comparison result information. For example, the processor 170 of the network unit 100 may determine whether the transmitted test packet is the same as the received test packet according to the comparison result (S370).

Next, when the transmitted test packet and the received test packet are the same, the processor 170 determines that the test result is normal, and accordingly, test result information corresponding thereto is output through the test result output unit 160 (S380).

In addition, when the transmitted test packet and the received test packet are different from each other, the processor 170 determines that the test result is abnormal, and accordingly, test result information corresponding thereto is output through the test result output unit 160 (S390).

Referring to FIG. 12, the processor 170 of the network unit 100 may be loaded upon entering the second test mode, and accordingly, a driver for proceeding with the second test mode may be loaded (S400).

Next, since the physical layer connected to the media access control layer 110 does not exist, the processor 170 of the network unit 100 may load a virtual physical layer driver to cause the connected physical layer to exist virtually (S410). As the virtual physical layer driver is loaded, the processor 170 may determine that the virtual physical layer exists.

Thereafter, in an embodiment, the processor 170 of the network unit 100 is connected to the loaded virtual physical layer driver through a virtual link, and accordingly sets the speed of the virtual link (S420).

Next, the embodiment may maintain a connection state between the virtual physical layer and the media access control layer 110 (S430), and perform the operations of S310 to S390 while the connection state is maintained.

FIG. 13 is a flowchart for step-by-step explaining a third test method according to an embodiment. In detail, FIG. 13 is a flowchart illustrating the test method of the network unit 100 according to the third test mode.

Referring to FIG. 13, when a second signal (e.g., a high-level signal) is input through a specific pin of the GPIO of the processor 170, the network unit 100 according to an embodiment may enter the third test mode. Accordingly, the processor 170 may load a driver to proceed with the third test mode.

Thereafter, the packet generation unit 120 of the network unit 100 in an embodiment generates a test packet to proceed with a test according to the third test mode (S500). In this case, the packet generation unit 120 may generate a random test packet.

Next, the packet encryption unit 130 of the network unit 100 in an embodiment receives a test packet generated through the packet generation unit 120. In addition, the packet encryption unit 130 encrypts the test packet (S510). To this end, the processor 170 of the network unit 100 selects an encryption algorithm for performing encryption through the packet encryption unit 130, and allows the test packet to be encrypted through the packet encryption unit 130 according to the selected encryption algorithm. In this case, the selection of the encryption algorithm may be made randomly. Alternatively, the selection of the encryption algorithm in an embodiment may be made according to a test mode.

Next, the media access control layer 110 of the network unit 100 may transmit the encrypted test packet through the transmission pins P1 and P2 (S520). In this case, the media access control layer 110 is connected to the slave media access control layer, and accordingly, the encrypted test packet may be transmitted to the connected slave media access control layer.

Next, the media access control layer 110 of the network unit 100 receives a test packet transmitted from the slave media access control layer through the reception pins P3 and P4 (S530). Specifically, the slave media access control layer may receive a test packet transmitted from the media access control layer 110 and transmit the received test packet back to the media access control layer 110.

Next, the packet decryption unit 140 of the network unit 100 decrypts the received test packet (S540). For example, the packet decryption unit 140 may decrypt the received test packet using a decryption algorithm corresponding to the encryption algorithm used in the packet encryption unit 130.

Next, the comparison unit 150 of the network unit 100 compares the test packet transmitted from the media access control layer 110 with the received test packet and outputs comparison result information to the processor 170 (S550). For example, the comparison unit 150 may compare the test packet generated in the packet generation unit 120 with the test packet decoded by the packet decryption unit 140 and output comparison result information thereof.

Next, the processor 170 of the network unit 100 may receive the comparison result information and determine a test result based on the comparison result information. For example, the processor 170 of the network unit 100 may determine whether the transmitted test packet is the same as the received test packet according to the comparison result (S560).

Next, when the transmitted test packet and the received test packet are the same, the processor 170 determines that the test result is normal, and accordingly, test result information corresponding thereto is output through the test result output unit 160 (S570).

In addition, when the transmitted test packet and the received test packet are different from each other, the processor 170 determines that the test result is abnormal, and accordingly, test result information corresponding thereto is output through the test result output unit 160 (S580).

A network unit according to an embodiment may include a controller unit implemented including a media access control layer. In this case, the network unit may operate under different conditions according to an established network environment. Accordingly, the embodiment may configure a test environment corresponding to a network environment in which the network unit operates, and allow the test of the network unit to be performed in the configured test environment. Accordingly, the embodiment may perform a test corresponding to the network environment in which the network unit is actually used, and accordingly, the test accuracy of the network unit may be improved.

In addition, the embodiment recognizes a first state in which the physical layer is connected to the network unit, a second state in which the physical layer is not connected, and a third state in which a sub media access control layer is connected, and determines a test mode of the network unit based on a recognition result. Specifically, the network unit in the embodiment supports first to third test modes. In addition, the network unit may recognize the currently configured test environment and enter a test mode corresponding to the recognized test environment to proceed with the test of the network unit. Accordingly, the embodiment may shorten a test progress time, thereby improving the productivity of the network unit.

Furthermore, an embodiment may perform a test on one network unit in various test environments, thereby improving product reliability and product satisfaction of the network unit.

The characteristics, structures and effects described in the embodiments above are included in at least one embodiment but are not limited to one embodiment. Furthermore, the characteristics, structures, and effects and the like illustrated in each of the embodiments may be combined or modified even with respect to other embodiments by those of ordinary skill in the art to which the embodiments pertain. Thus, it should be construed that contents related to such a combination and such a modification are included in the scope of the embodiment.

The above description has been focused on the embodiment, but it is merely illustrative and does not limit the embodiment. A person skilled in the art to which the embodiment pertains may appreciate that various modifications and applications not illustrated above are possible without departing from the essential features of the embodiment. For example, each component particularly represented in the embodiment may be modified and implemented. In addition, it should be construed that differences related to such changes and applications are included in the scope of the embodiment defined in the appended claims.

## Claims

1. A method for testing a controller unit implemented including a media access control layer, the method comprising:
obtaining data through a management data pin of the media access control layer;
determining whether a physical layer connected to the media access control layer exists based on the obtained data;
performing a test of the controller unit in a first test mode in response to determining that the connected physical layer exists; and
performing a test of the controller unit in a second test mode in response to determining that the connected physical layer does not exist.

2. The method of claim 1, wherein the management data pin includes an MDIO (Management Data Input/Output) pin of the media access control layer.

3. The method of claim 1 or 2, wherein the obtaining of the data includes obtaining identification information of the connected physical layer,
wherein if the identification information of the physical layer is obtained, the physical layer is recognized as connected to the media access control layer, and
wherein if the identification information of the physical layer is not obtained, the physical layer is recognized as not connected to the media access control layer.

4. The method of claim 1, further comprising:
receiving a signal input through a specific pin of a GPIO (General-Purpose Input/Output) of the controller unit,
wherein the obtaining of the data is performed when a first signal is received through the specific pin, and
wherein when a second signal is received through the specific pin, performing a test of the controller unit in a third test mode.

5. The method of claim 4, further comprising:
generating a first test packet;
encrypting the generated first test packet;
transmitting the encrypted first test packet;
receiving a second test packet corresponding to the first test packet;
decoding the received second test packet; and
comparing the first test packet and the second test packet,
wherein a transmission path of the first test packet and a reception path of the second test packet are different depending on the first to third test modes.

6. The method of claim 5, wherein the transmitting of the first test packet includes transmitting the first test packet to the connected physical layer in the first test mode, and
wherein the receiving of the second test packet includes receiving the second test packet transmitted from the connected physical layer in the first test mode.

7. The method of claim 5, wherein a transmission pin and reception pin of the media access control layer are directly connected in the second test mode, and
wherein the first test packet in the second test mode is a test packet transmitted from the transmission pin of the media access control layer, and
wherein the second test packet in the second test mode is a test packet received through the reception pin of the media access control layer.

8. The method of claim 5, wherein the transmitting of the first test packet includes transmitting the first test packet to a sub or slave media access control layer connected to the media access control layer in the third test mode, and
wherein the receiving of the second test packet includes receiving the second test packet corresponding to the first test packet transmitted from the sub or slave media access control layer.

9. The method of any one of claims 5 to 8, further comprising: selecting an encryption algorithm for encrypting the generated first test packet.

10. The method of claim 9, wherein the selecting of the encryption algorithm includes selecting different encryption algorithms according to test modes for testing the controller unit.
